# EUROPEAN PATENT APPLICATION

(11) **EP 1 350 937 A2**
(43) Date of publication of application: **08.10.2003**
(21) Application number: 03007691.3
(22) Date of filing: 03.04.2003
(51) Int. Cl.: F02D 29/06, F02D 41/12

(54) **Energy regeneration control system and method for an internal combustion engine**

(30) Priority: 04.04.2002 JP 2002102537
(71) Applicant: TOYOTA JIDOSHA KABUSHIKI KAISHA, Aichi-ken 471-8571 (JP)
(72) Inventor: Kaneko, Tomohiro, c/o Toyota Jidosha Kabushiki K., Toyota-shi, Aichi-ken, 471-8571 (JP); Kogo, Tomoyuki, c/o Toyota Jidosha Kabushiki K., Toyota-shi, Aichi-ken, 471-8571 (JP)
(74) Representative: Winter, Brandl, Fürniss, Hübner, Röss, Kaiser, Polte Partnerschaft

(57) **Abstract**

A energy regeneration device 30 is provided, which performs energy regeneration by converting kinetic energy of a vehicle into electric energy. The opening of a throttle valve 17 is controlled so as to achieve a minimum difference between the intake pressure and the exhaust pressure when energy regeneration is performed. In order to reduce the pressure difference, an EGR control valve 26 is maintained at a fully-opened position during energy regeneration.

## Description

The invention relates to energy regeneration control system and method for an internal combustion engine.

As is known, a so-called engine brake is applied to a vehicle when engine intake loss is increased by closing the throttle valve during an engine deceleration operation where the engine is running in such a manner as to decelerate the vehicle. When the engine intake loss increases, however, kinetic energy of the vehicle is wasted, which is undesirable.

To counter this, in a known internal combustion engine, a power generator is driven by the crankshaft during the engine deceleration operation, whereby the kinetic energy of the vehicle is converted into electric energy, namely energy regeneration is performed (refer to Japanese Laid-open Patent Publication No. 9-256885).

Roughly speaking, in this engine, the kinetic energy of the vehicle is converted into electric energy or wasted in the form of an engine loss. Therefore, when the engine loss is made as small as possible, the largest amount of power is regenerated.

It is true that the engine intake loss reduces when the throttle valve is opened. By merely opening it, however, the engine compression loss or engine exhaust loss may increase with an increase in the intake amount. Namely, the engine loss can not always be reduced by merely opening the throttle valve.

It is therefore an object of the invention to provide a energy regeneration control system for an internal combustion engine, which achieves further efficiency in regenerating kinetic energy of a vehicle.

According to one aspect of the invention, a energy regeneration control system for an internal combustion engine including power regenerating means for performing energy regeneration by converting kinetic energy of a vehicle into electric energy is provided with energy regeneration controlling means. The energy regeneration controlling means is adapted to control an opening of a throttle valve to achieve a minimum difference between a pressure in an intake passage of the internal combustion engine and a pressure in an exhaust passage of the internal combustion engine when energy regeneration is performed using the power regenerating means.

According to the above-described energy regeneration control system, the energy regeneration controlling means may control the opening of the throttle valve such that a difference between the pressure in the intake passage and the pressure in the exhaust passage becomes a predetermined pressure difference that is determined in advance as a function of an engine speed of the internal combustion engine and the pressure in the intake passage.

According to the above-described energy regeneration control system, also, pressure difference reducing means for reducing the difference between the pressure in the intake passage and the pressure in the exhaust passage without controlling the opening of the throttle valve may be provided; and the pressure difference reducing means may reduce the pressure difference between the pressure in the intake passage and the pressure in the exhaust passage when energy regeneration is performed using the power regenerating means.

According to the above-described energy regeneration control system, also, when energy regeneration is performed using the power regenerating means, the pressure difference reducing means may reduce the difference between the pressure in the intake passage; and the pressure in the exhaust passage if the energy regeneration controlling means can not control the opening of the throttle valve to an opening required for achieving the minimum difference between the pressure in the intake passage and the pressure in the exhaust passage.

According to the above-described energy regeneration control system, also, an exhaust gas recirculation passage for connecting the intake passage to the exhaust passage may be provided; an EGR control valve may be disposed in the exhaust gas recirculation passage; and the pressure difference reducing means may open the EGR control valve when energy regeneration is performed using the power regenerating means.

According to the above-described energy regeneration control system, also, fresh air amount controlling means for controlling an fresh air amount without controlling the opening of the throttle valve (17) may be provided; and the fresh air amount controlling means may reduce the fresh air amount when energy regeneration is performed using the power regenerating means.

According to the above-described energy regeneration control system, also, valve controlling means for controlling an opening operation of at least one of an intake valve and an exhaust valve may be provided; and the pressure difference reducing means may control the opening operation of at least one of the intake valve and the exhaust valve via the valve controlling means so as to reduce the difference between the pressure in the intake passage and the pressure in the exhaust passage when energy regeneration is performed using the power regenerating means.

According to the above-described energy regeneration control system, also, an exhaust-gas-driven type supercharger driven by an exhaust gas in the internal combustion engine may be provided; a bypass passage may be provided, which bypasses the exhaust-gas-driven type supercharger by connecting a portion of the exhaust passage located upstream of the exhaust-gas-driven type supercharger to a portion of the exhaust passage located downstream of the exhaust-gas-driven type supercharger; a bypass control valve may be disposed in the bypass passage; and the pressure reducing means may open the bypass control valve when energy regeneration is performed using the power regenerating means.

According to the above-described energy regeneration control system, also, an exhaust-gas-driven type supercharger driven by an exhaust gas in the internal combustion engine may be provided; turbine capacity controlling means may be provided, which controls a turbine capacity of the exhaust-gas-driven type supercharger without controlling the opening of the throttle valve; and the pressure difference means may increase the turbine capacity of the exhaust-gas-driven type supercharger via the turbine capacity controlling means when energy regeneration is performed using the power regenerating means.

According to the above-described energy regeneration control system, also, supply gas reducing means for reducing an amount of gas to be supplied to the internal combustion engine without controlling the opening of the throttle valve may be provided; and the supply gas reducing means may reduce the amount of gas to be supplied to the internal combustion engine when energy regeneration is performed using the power regenerating means.

According to the above-described energy regeneration control system, also, a branch passage may be provided, which extends from an intermediate portion of the intake passage located upstream of the throttle valve and is branched into an intake bypass passage extending to a portion of the intake passage located downstream of the throttle valve and an exhaust bypass passage extending to the exhaust passage; a switching valve for selectively connecting the branch passage to either one of the intake bypass passage and the exhaust bypass passage may be provided; and the supply gas reducing means may connect the branch passage to the exhaust bypass passage via the switching valve when energy regeneration is performed using the power regenerating means.

According to the above-described energy regeneration control system, also, an exhaust-gas-driven type supercharger driven by an exhaust gas in the internal combustion engine. In the internal combustion engine including a exhaust-gas-driven type supercharger, the difference between the pressure in the intake passage and the pressure in the exhaust passage increases due to the supercharging effect, which may increase the pumping loss. Therefore, it is possible to achieve further efficiency in regenerating kinetic energy of a vehicle by controlling the opening of the throttle valve.

According to a further aspect of the invention, in an internal combustion engine including power regenerating means for performing energy regeneration by converting kinetic energy of a vehicle into electric energy, energy regeneration controlling means is provided, which controls a difference between a pressure in an intake passage of the internal combustion engine and a pressure in an exhaust passage of the internal combustion engine by controlling an opening of a throttle valve; and the energy regeneration controlling means controls energy regeneration efficiency of the power regenerating means by controlling the opening of the throttle valve.

According to a further aspect of the invention, in a energy regeneration control method for an internal combustion engine including power regenerating means for performing energy regeneration by converting kinetic energy of a vehicle into electric energy, an opening of a throttle valve is controlled so as to achieve a minimum difference between a pressure in an intake passage of the internal combustion engine and a pressure in an exhaust passage of the internal combustion engine when energy regeneration is performed using the power regenerating means.

Fig. 1 is a view schematically showing a construction of an internal combustion engine incorporating a energy regeneration control system according to a first embodiment of the invention.

Fig. 2 is a graph showing the relationship among an intake pressure PIN, an exhaust pressure PEX, and a pressure difference PD.

Fig. 3 is an example of a map for determining a minimum value PDM of the pressure difference PD.

Fig. 4 is a view schematically showing a modified construction of the energy regeneration control system according to the first embodiment for performing an additional controls

Fig. 5 is a view schematically showing a modified construction of the energy regeneration control system according to the first embodiment for performing an additional control.

Fig. 6 is a view schematically showing a modified construction of the energy regeneration control system according to the first embodiment for performing another additional control.

Fig. 7 is a view schematically showing a modified construction of the energy regeneration control system according to the first embodiment for performing another additional control.

Fig. 8 is a flowchart showing a routine of a energy regeneration control.

Fig. 9 is a flowchart showing a routine of a energy regeneration control by a energy regeneration control system according to a second embodiment of the invention.

Fig. 10 is an example of a map for determining a target pressure difference TPD.

Fig. 11 is a flowchart showing a routine of a energy regeneration control by a energy regeneration control system according to a third embodiment of the invention.

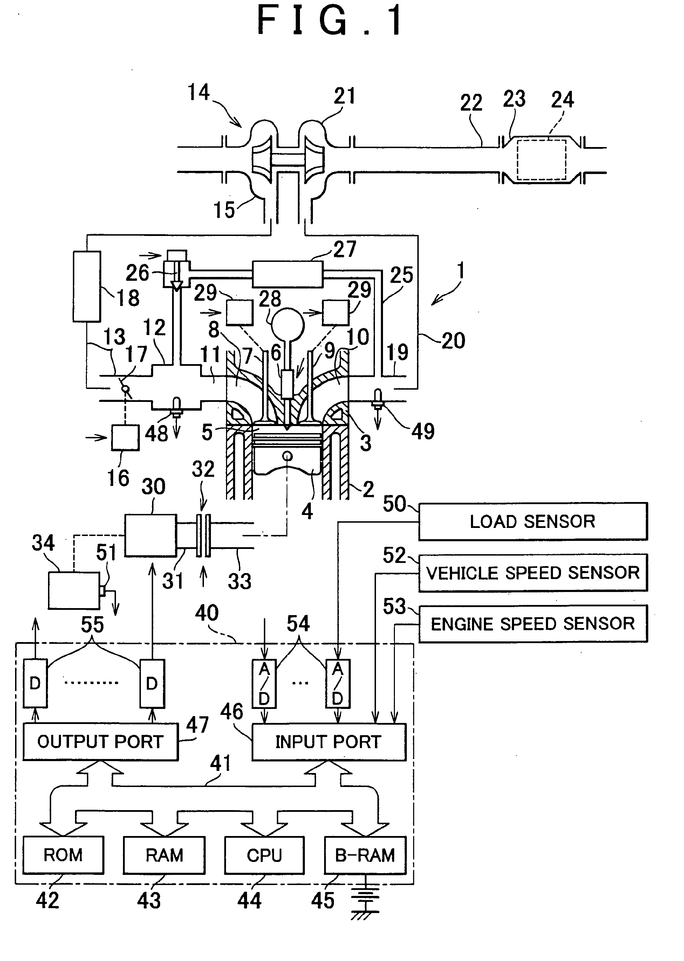

Fig. 1 is a view schematically showing the construction of a compression-ignition type internal combustion engine that incorporates a energy regeneration control system according to a first embodiment of the invention. However, this invention may also be applied to a spark-ignition type internal combustion engine.

Referring to Fig. 1, an engine body 1 includes a cylinder block 2, a cylinder head 3, a piston 4, a combustion chamber 5, an electrically-controlled fuel injection valve 6, an intake valve 7, an intake port 8, an exhaust valve 9, and an exhaust port 10. The intake port 8 is connected to a surge tank 12 via an intake manifold 11, and the surge tank 12 is connected to a compressor 15 of an exhaust turbo charger 14 via an intake duct 13. A throttle valve 17, to be driven by a stepper motor 16, is disposed within the intake duct 13, and a cooler 18 is disposed along the intake duct 13 so as to cool intake air flowing in the intake duct 13. In the internal combustion engine shown in Fig. 1, engine coolant is delivered into the cooler 18 to cool the intake air.

On the other hand, the exhaust port 10 is connected to an inlet of an exhaust turbine 21 of the exhaust turbo charger 14 via an exhaust manifold 19 and an exhaust pipe 20, and an outlet of the exhaust turbine 21 is connected via an exhaust duct 22 to a casing 23. Also, a catalyst 24 is disposed within the casing 23.

The exhaust manifold 19 and the surge tank 12 are connected to each other via an exhaust gas recirculation passage 25, and an electrically-controlled EGR control valve 26 is disposed within the exhaust gas recirculation passage (hereinafter will be referred to as "EGR passage") 25. A cooler 27 is arranged along the EGR passage 25 so as to cool EGR gas flowing in the EGR passage 25. Thus, in the internal combustion engine shown in Fig. 1, engine coolant is distributed to the cooler 27 to cool EGR gas. In the meantime, the injection valve 6 is connected to a common rail 28, serving as a fuel reservoir, via a fuel supply pipe. Fuel is supplied into the common rail 28 by an electrically-controlled fuel pump (not shown) capable of changing its pumping capacity, and the fuel supplied into the common rail 28 is then supplied to the injection valve 6 via the fuel supply pipe.

The intake valve 7 and exhaust valve 9 are respectively driven by corresponding valve drive devices 29. Each valve drive device 29 is adapted to drive the valve 7 or 9 while changing the opening state of the valve as needed. More specifically, the valve drive device 29 changes valve opening timing, valve-open duration, valve stroke, overlapping duration which is a time duration in which both the intake valve 7 and the exhaust valve 9 are opened, and so on.

The internal combustion engine shown in Fig. 1 further includes a motor regenerator 30 serving as a motor or a power generator. An input/output shaft 31 of the motor regenerator 30 is connected to a crankshaft 33 via an electromagnetic clutch 32. Upon using the motor regenerator 30 as a motor, the electromagnetic clutch 32 is engaged to connect the motor regenerator 30 to the crankshaft 33, whereby the motor regenerator 30 runs using power supplied from a battery 34 and thereby rotates the crankshaft 33. Also, upon using the motor regenerator 30 as a power generator, the electromagnetic clutch 32 is engaged to connect the motor regenerator 30 to the crankshaft 33. At this time, however, the motor regenerator 30 generates power by being driven by the crankshaft 33, thus converting kinetic energy of the vehicle into electric energy, namely performing "energy regeneration." The electric energy generated is stored in the battery 34.

An ECU (Electronic Control Unit) 40 is mainly constituted of a digital computer including a ROM (Read Only Memory) 42, a RAM (Random Access Memory) 43, a CPU (Central Processing Unit) 44, a B-RAM (Backup Random Access Memory) 45 connected to an uninterruptible power supply, an input port 46, and an output port 47, all connected via a bidirectional bus 41. An intake pressure sensor 48 which generates output voltage proportional to the pressure in the surge tank 12 is installed on the surge tank 12, while an exhaust pressure sensor 49 which generates output voltage proportional to the pressure in the exhaust manifold 19 is installed on the exhaust manifold 19. Also, a load sensor 50 that generates output voltage proportional to the depression of an accelerator pedal is connected to the accelerator pedal, and a battery capacity sensor 51 that generates output voltage proportional to the amount of electric energy stored in the battery 34, namely which is the charged capacity of the battery 34, is installed on the battery 34. The output voltage generated from each of these sensors 48, 49, 50, and 51 is input to the input port 46 via a corresponding one of AD converters. In addition, the input port 46 is also connected to a vehicle speed sensor 52 which generates pulses indicative of the vehicle speed and an engine speed sensor 53 which generates pluses indicative of the engine speed. On the other hand, the output port 47 is connected to the injection valve 6, the stepper motor 16 for driving the throttle valve 17, the EGR control valve 26, the valve drive devices 29, the motor regenerator 30, and the electromagnetic clutch 32 via corresponding drive circuits 55.

In the internal combustion engine shown in Fig. 1, in the case where engine deceleration operation is performed when energy regeneration is needed, energy regeneration is performed using the motor regenerator 30 in the aforementioned manner. In the meantime, the opening of the throttle valve 17 is maintained at an idling opening, a certain small opening for allowing the engine to idle, when the depression of the accelerator pedal is zero, while the throttle valve 17 is fully opened when the accelerator pedal is completely pressed down. Thus, during engine deceleration operation, a so-called engine brake is applied to the vehicle.

Roughly speaking, therefore, the kinetic energy of the vehicle is recovered and converted into electric energy, otherwise wasted in the form of an engine loss. Thus, if the engine loss is minimized, it maximizes the energy regeneration efficiency. The engine loss can be reduced by reducing the engine intake loss and/or work and thereby reducing the engine exhaust loss and/or work. The engine intake loss is reduced when the pressure in the intake passage downstream of the throttle valve 17 (intake pressure PIN) becomes higher while the pressure in the exhaust port 10 (exhaust pressure PEX) becomes lower.

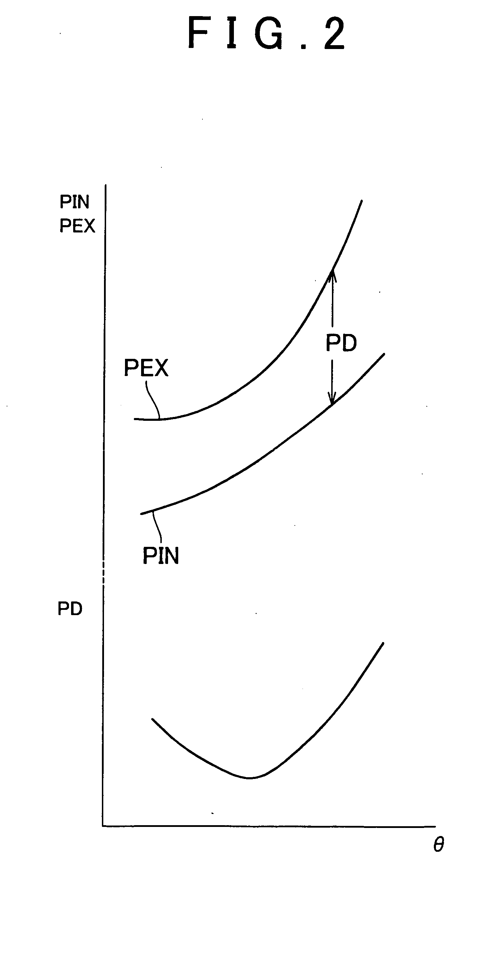

The intake pressure PIN and exhaust pressure PEX can be controlled by controlling the opening of the throttle valve 17. Fig. 2 is a graph schematically showing relative changes in these pressures. Referring to the graph, the exhaust pressure PEX becomes lower as an opening θ of the throttle valve 17 becomes smaller. However, since the intake pressure PIN also becomes lower as the opening θ of the throttle valve 17 becomes smaller, the engine loss can not be reduced by merely decreasing the opening θ of the throttle valve 17. That is, for achieving the highest possible intake pressure PIN while achieving the lowest possible exhaust pressure PEX, it is necessary to achieve a minimum value of a difference PD between the exhaust pressure PEX and the intake pressure PIN (= PEX - PIN).

As shown in Fig. 2, there is a point of the line representing the pressure difference PD which indicates its minimum value PDM. In the first embodiment of the invention, when energy regeneration is performed using the motor regenerator 30, the opening θ of the throttle valve 17 is controlled so as to bring the pressure difference PD to the minimum value PDM. Thus, the engine intake loss is reduced while the engine exhaust loss is reduced, which increases efficiency of the energy regeneration. This is the basic concept of the invention.

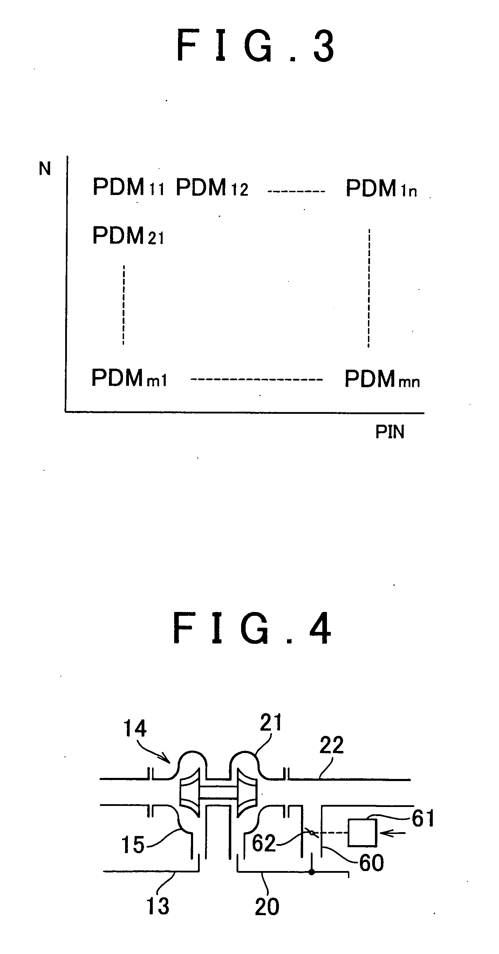

More specifically, the minimum value PDM indicative of the minimum pressure difference PD is determined in advance based on test results, or the like, and is stored in the ROM 42 in the form of a map as shown in Fig. 3, which is formulated, for example, as a function of engine speed N and the intake pressure PIN. In operation, the pressure difference PD is calculated from the intake pressure PIN detected by the intake pressure sensor 48 and the exhaust pressure PEX detected by the exhaust pressure sensor 49 when energy regeneration is performed. Then, the opening θ of the throttle valve 17 is controlled so as to bring the pressure difference PD to the minimum value PDM calculated using the map.

In the meantime, during engine deceleration operation where energy regeneration is not performed, the opening θ of the throttle valve 17 is maintained at the above-indicated idling opening. The idling opening is determined so as to achieve an intake amount needed to assure a stable idling operation, and is not necessarily the same as the opening required for bringing the pressure difference PD to the minimum value PDM.

According to the first embodiment of the invention, as well as the throttle valve opening control described above, an additional control or controls for further reducing the pressure difference PD without controlling an opening θTH of the throttle valve 17 may be performed. Hereinafter, various examples of such an additional control will be described.

In a first additional control, the EGR control valve 26 is opened, preferably fully opened at the time of performing energy regeneration, so that exhaust gas is released into the surge tank 12 from the exhaust manifold 19 as EGR gas. With this arrangement, as compared to when the EGR control valve 26 is closed, the exhaust pressure PEX becomes lower while the intake pressure PIN becomes higher.

In a second additional control, during energy regeneration, the operating conditions (e.g., valve opening timing, valve opening duration, valve stroke, overlapping duration in which the valves 7 and 9 are both opened) of the intake valve 7 and/or the exhaust valve 9 are controlled such that the pressure difference PD becomes small. During energy regeneration, for example, the time to open the intake valve 7 may be delayed as compared to when energy regeneration is not performed. In this case, the intake valve 7 is opened for an extended time after the piston 4 has reached the compression bottom dead center, which allows a larger amount of gas introduced into the combustion chamber 5 to return into the intake port 8. As result of this, the engine compression loss reduces. Alternatively, the time to open the exhaust valve 9 may be advanced during energy regeneration as compared to when energy regeneration is not performed. In this case, the exhaust valve 9 is opened for an extended time before the piston 4 reaches the exhaust bottom dead center, which creates a state where the exhaust valve 9 is open while the pressure within the combustion chamber 5 is high. Thus, an increase in the pressure in the exhaust manifold 19 can be reduced or prevented, whereby the engine exhaust loss reduces.

In a third additional control, as shown in Fig. 4, the exhaust pipe 20 and the exhaust duct 22 are connected to each other via a bypass pipe 60, and a bypass control valve 62, to be driven by an actuator 61, is disposed within the bypass pipe 60. The bypass control valve 62 is closed when energy regeneration is not performed, and is opened when energy regeneration is performed. When the bypass control valve 62 is fully opened, exhaust gas flowing in the exhaust pipe 20 flows to the exhaust duct 22 by bypassing the exhaust turbine 21 of the exhaust turbo charger 14, whereby the exhaust pressure PEX becomes lower, namely the pressure difference PD becomes smaller.

Normally, the inlet and outlet of the exhaust turbine 21 are connected to each other via a wastegate valve. Therefore, if the wastegate valve is adapted to be opened when performing energy regeneration, the above-described control may be effected without newly providing the bypass pipe 60 and the bypass control valve 62.

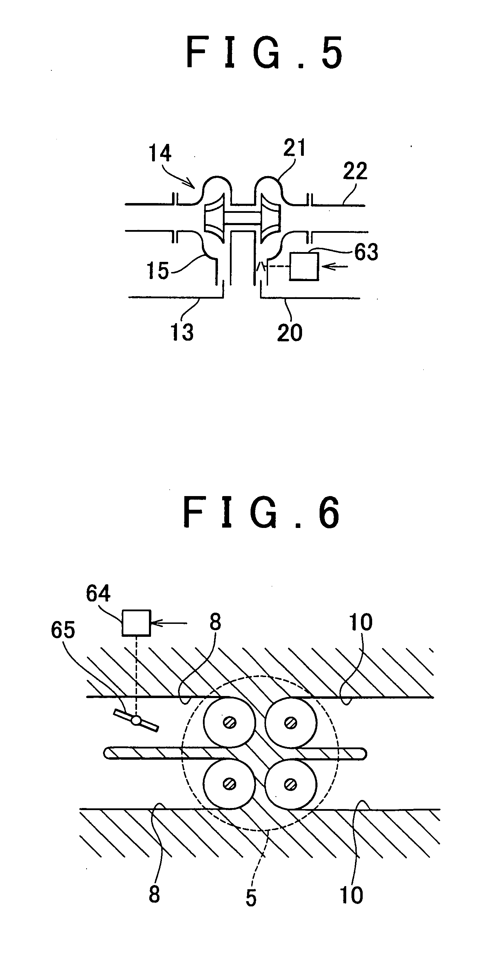

In a forth additional control, as shown in Fig. 5, there is provided a turbine capacity controller 63 for controlling the turbine capacity of the exhaust turbine 21 of the exhaust turbo charger 14. The turbine capacity controller 63 is operated to control the turbine capacity by changing the flow path area of a nozzle disposed at the inlet of the exhaust turbine 21. The flow path area of the nozzle is made large to increase the turbine capacity, and is made small to decrease it. In the forth additional control, more specifically, the turbine capacity is made larger during energy regeneration, as compared to when energy regeneration is not performed. As a result, the flow path resistance accordingly lowers and the pressure difference PD thereby reduces.

According to the first additional control, the pressure difference PD becomes smaller when a larger amount of EGR gas flows into the surge tank 12 from the exhaust manifold 19. When the amount of fresh air to be supplied to the engine (hereinafter will be referred to as "fresh air amount" where appropriate) reduces, it causes an increased amount of EGR gas to flow into the surge tank 12 from the exhaust manifold 19. Namely, the pressure difference PD can be made smaller by reducing the fresh air amount.

Meanwhile, the boost pressure reduces when the bypass control valve 62 is opened in the third additional control, or when the turbine capacity is increased in the forth additional control. In these cases, namely, the fresh air amount or the intake pressure PIN becomes lower. Therefore, performing the first additional control and the third or fourth additional control in combination may further reduce the pressure difference PD. Thus, the engine intake loss and engine exhaust loss can be reduced by performing the throttle opening control or additional control as described above, whereby improved energy regeneration efficiency can be assured.

Also, the energy regeneration efficiency may further be improved by, for example, reducing the engine compression loss and/or work. The engine compression loss and/or work can be reduced by reducing the amount of supply gas (i.e., fresh air, or fresh air and EGR gas) to be supplied into the combustion chamber 5 during energy regeneration. Hereinafter, examples of a supply gas reducing control will be described.

In one supply gas reducing control, as shown in Fig. 6, a swirl control valve 65, to be driven by an actuator 64, is disposed in one of a pair of the intake ports 8. When the swirl control valve 65 is open, the supply gas flows into the combustion chamber 5 through both of the intake ports 8, whereby a relatively large amount of supply gas is delivered into the combustion chamber 5. When the swirl control valve 65 is closed, conversely, the supply gas flows into the combustion chamber 5 through the other intake port 8 only, whereby a relatively small amount of supply gas is delivered into the combustion chamber 5. At this time, swirl flows are produced within the combustion chamber 5 along an axis of the cylinder. In this example, as shown in Fig. 6, the swirl control valve 65 is closed during energy regeneration, in order to reduce the amount of supply gas and to thereby reduce the engine compression loss.

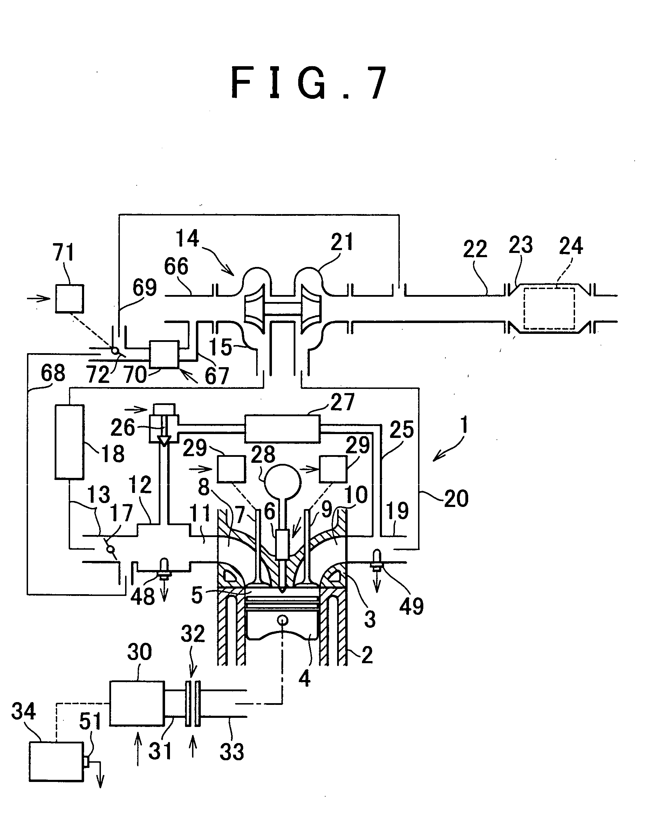

In another supply gas reducing control, as shown in Fig. 7, a branch pipe 67 extends from an intermediate portion of an intake pipe 66_connected to the inlet of the compressor 15. Furthermore, the branch pipe 67 is branched into an intake bypass pipe 68 extending to a portion of the intake duct 13 located downstream of the throttle valve 17 and an exhaust bypass pipe 69 extending to a portion of the exhaust duct 22 located upstream of the catalyst 24. Also, a heater 70 and a switching valve 72 are disposed within the branch pipe 67. The heater 70 is used for raising the temperature of air flowing in the branch pipe 67, and the switching valve 72 is operated, by being driven by an actuator 71, to selectively connect the branch pipe 67 to either one of the intake bypass pipe 68 and the exhaust bypass pipe 69. Here, the heater 70 may be provided by a heater used for directly or indirectly heating air for warming the passage compartment of the vehicle.

Thus, after delivered into the branch pipe 67 and heated by the heater 70 therein, the air is either supplied into the combustion chamber 5 via the intake bypass pipe 68 or into the catalyst 24 via the exhaust bypass pipe 69, so that the engine or the catalyst 24 can be quickly warmed up.

In this example, therefore, the switching valve 72 is controlled to connect the branch pipe 67 to the exhaust bypass pipe 69 when performing energy regeneration. As a result, the amount of air to be supplied into the combustion chamber 5 via the intake bypass pipe 68 reduces, whereby the supply gas amount reduces.

The actuator 61 shown in Fig. 4, the turbine capacity controller 63 shown in Fig. 5, the actuator 64 shown in Fig. 6, and the heater 70 and the actuator 71 shown in Fig. 7 are all connected to the ECU 40 and they are controlled by signals output from the ECU 40.

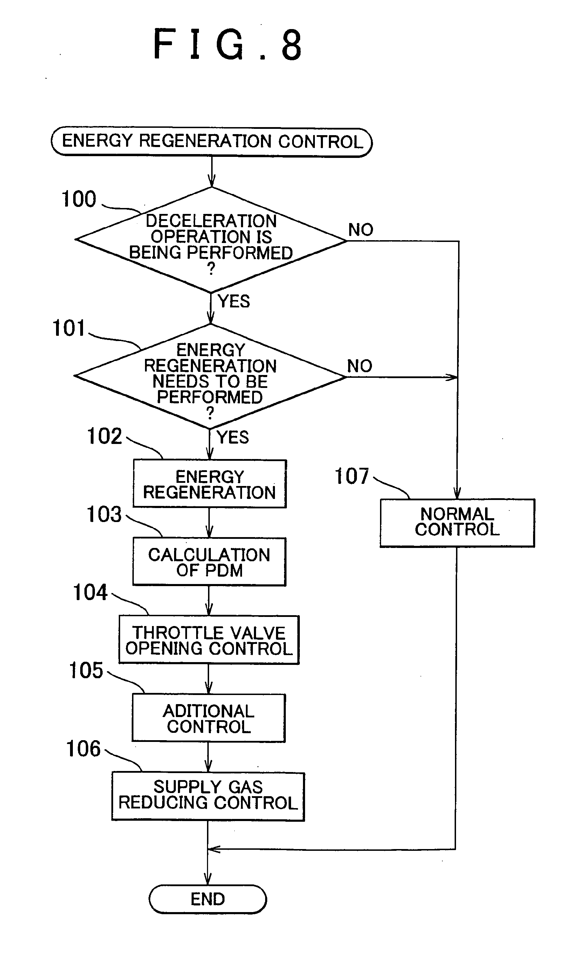

Fig. 8 shows a routine of the energy regeneration control described above. This routine is executed as an interrupt routine at predetermined time intervals.

Referring to Fig. 8, it is first determined in step S100 whether the engine deceleration operation is being performed. This may be determined based on the depression of the accelerator pedal, the depression of the brake pedal, the vehicle speed, the change amount in the engine speed or the fuel injection quantity. If it is determined that the engine deceleration operation is being performed, the routine proceeds to step S101 where it is determined whether energy regeneration is necessary. In the first embodiment of the invention, when the charged capacity of the battery 34 is smaller than a predetermined lower limit value, it is determined that energy regeneration is necessary. When energy regeneration is necessary, the routine proceeds to step S102 to perform energy regeneration. The routine then proceeds to step S103 where the minimum value PDM of the pressure difference PD is calculated from the map as shown in Fig. 3. Subsequently, in step S104, the opening θTH of the throttle valve 17 is controlled so as to bring the actual pressure difference PD to its minimum value PDM. After that, the additional control is performed to further reduce the pressure difference PD in step S105, and the supply gas reducing control is thereafter performed in step S106. Conversely, if it is determined in step S100 that engine deceleration operation is not being performed or it is determined in step S101 that energy regeneration is not necessary, the routine proceeds to step S107 to resume the normal control.

In the routine shown in Fig. 8, the additional control (step S105) and the supply gas reducing control (step S106) are both performed to further reducing the pressure difference PD. Each of these controls, however, may be omitted if necessary as aforementioned.

By the way, the appropriate minimum value PDM of the pressure difference PD is different depending upon the type of additional control and/or supply gas reducing control to be actually performed. It is therefore necessary to formulate the map shown in Fig. 3 in accordance with the additional control and/or supply gas reducing control to be actually performed.

Next, a second embodiment of the invention will hereinafter be described. In the first embodiment, as described above, the engine loss is reduced during engine deceleration operation. That is, the engine braking force reduces at this time. During engine deceleration operation, however, a certain level of braking force needs to be produced in some way. Also, even if the motor regenerator 30 produces increased braking force in the above-described manner, it may nevertheless be insufficient.

Therefore, in the second embodiment, the opening θTH of the throttle valve 17 is controlled to a certain constant opening needed to obtain a sufficient braking force during engine deceleration operation. With this arrangement, however, the pressure difference PD can not be controlled to the minimum value PDM by controlling the opening θTH. On the other hand, by performing one or more of the first to fourth additional controls described above, the pressure difference PD can be reduced independent of the opening θTH of the throttle valve 17.

In view of the above situation, in the second embodiment, at least one of the first to forth additional controls is performed while maintaining the opening θTH of the throttle valve 17 to the above-indicated constant opening during energy regeneration. Thus, even when the throttle valve opening control is in some way limited, the pressure difference PD can be reduced to assure high energy regeneration efficiency.

Furthermore, in this embodiment, the above-described supply gas control can also be performed where necessary, as in the first embodiment.

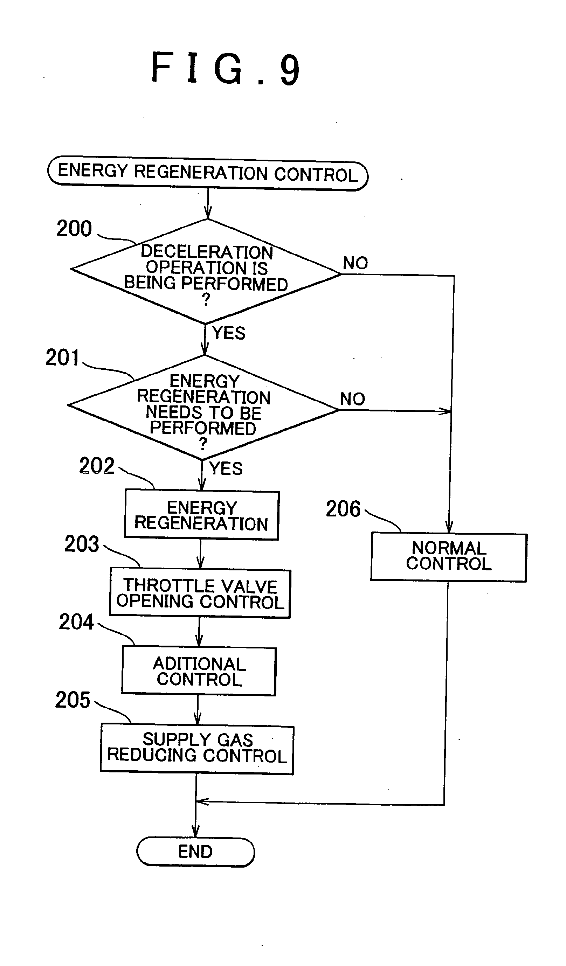

Fig. 9 shows a routine of a energy regeneration control in the second embodiment of the invention. This routine is executed as an interrupt routine at predetermined time intervals. Referring to Fig. 9, it is first determined in step S200 whether the engine deceleration operation is being performed. If it is determined that the engine deceleration operation is being performed, the routine proceeds to step S201 where it is determined whether energy regeneration is necessary. When energy regeneration is necessary, the routine proceeds to step S202 to perform energy regeneration. The routine then proceeds to step S203 where the opening θTH of the throttle valve 17 is controlled to the above-indicated constant opening. Subsequently, in step S204, the additional control or controls is performed to further reduce the pressure difference PD. After that, the supply gas reducing control is performed in step S205. Conversely, if it is determined in step S200 that engine deceleration operation is not being performed or it is determined in step 201 that energy regeneration is not necessary, the routine proceeds to step S206 to resume the normal control.

Next, a third embodiment of the invention will hereinafter be described. In the above-described first and second embodiments, the controls are performed in order to improve the energy regeneration efficiency or to increase the energy regeneration amount. When the energy regeneration efficiency improves or energy regeneration amount increases, however, it may reduce the engine braking force as aforementioned. Besides, when only a small amount of power needs to be generated by the motor regenerator 30, it is not necessarily required to improve the energy regeneration efficiency or increase the energy regeneration amount.

As is apparent from the above descriptions, the energy regeneration efficiency improves or the energy regeneration amount increases as the pressure difference PD becomes smaller, and it is possible to control the pressure difference PD by controlling the opening θTH. In the third embodiment, therefore, the pressure difference PD is controlled by controlling the opening θTH of the throttle valve 17 in order to control the energy regeneration efficiency or energy regeneration amount of the motor regenerator 30.

More specifically, in the third embodiment, a target pressure difference TPD of the pressure difference PD is obtained when performing energy regeneration, and the opening θTH of the throttle valve 17 is controlled so as to bring the actual pressure difference PD to the target pressure difference TPD.

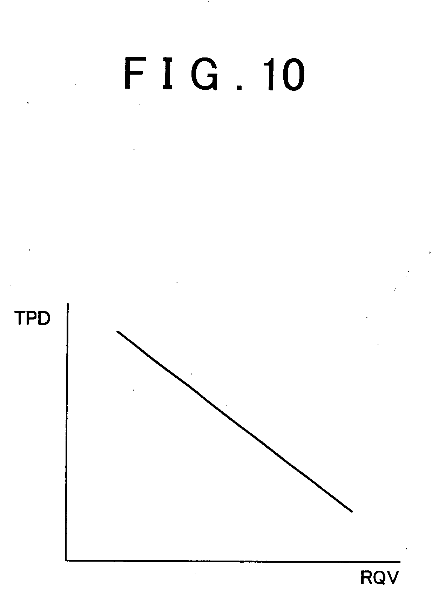

The target pressure difference TPD is a predetermined value which reduces as a required generated power RQV of the motor regenerator 30 increases as shown in Fig. 10. Thus, with an increase in the required generated power RQV, the energy regeneration efficiency or energy regeneration amount reduces, whereby the engine braking force increases. The target pressure difference TPD is in advance stored in the ROM 42 in the form of a map as shown in Fig. 10. The required generated power RQV may be determined based on the charged capacity of the battery 34, or the like.

In the third embodiment, the actual energy regeneration efficiency and energy regeneration amount is determined in accordance with the target pressure difference TPD. Therefore, the target pressure difference TPD may be regarded as being a target value of the energy regeneration efficiency or energy regeneration amount. In view of this, it may be considered that the opening θTH of the throttle valve 17 is controlled so as to bring the energy regeneration efficiency or energy regeneration amount to its target value in the third embodiment.

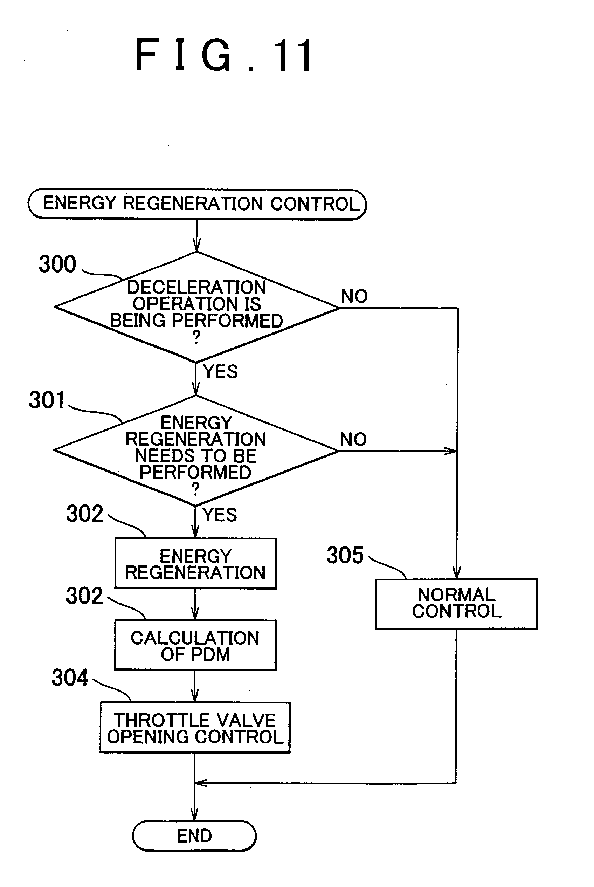

Fig. 11 shows a routine of a energy regeneration control in the third embodiment of the invention. This routine is executed as an interrupt routine at predetermined time intervals. Referring to Fig. 11, it is first determined in step S300 whether the engine deceleration operation is being performed. If it is determined that the engine deceleration operation is being performed, the routine proceeds to step S301 where it is determined whether energy regeneration is necessary. If energy regeneration is necessary, the routine proceeds to step S302 to perform energy regeneration. The routine then proceeds to step S303 where the target pressure difference TPD is calculated from the map as shown in Fig. 10. Subsequently, in step S304, the opening θTH of the throttle valve 17 is controlled so as to bring the pressure difference PD to the target pressure difference TPD. Conversely, if it is determined in step S300 that engine deceleration operation is not being performed or it is determined in step S301 that energy regeneration is not necessary, the routine proceeds to step S305 to resume the normal control.

## Claims

1. A energy regeneration control system for an internal combustion engine (1) including power regenerating means (30) for performing energy regeneration by converting kinetic energy of a vehicle into electric energy, the energy regeneration control system being **characterized by** comprising:
energy regeneration controlling means for controlling an opening of a throttle valve (17) to achieve a minimum difference between a pressure in an intake passage (13) of the internal combustion engine (1) and a pressure in an exhaust passage (20) of the internal combustion engine (1) when energy regeneration is performed using the power regenerating means (30).

2. The energy regeneration control system according to claim 1, **characterized in that**:
the energy regeneration controlling means controls the opening of the throttle valve (17) such that a difference between the pressure in the intake passage (13) and the pressure in the exhaust passage (20) becomes a predetermined pressure difference that is determined in advance as a function of an engine speed of the internal combustion engine (1) and the pressure in the intake passage (13).

3. The energy regeneration control system according to claim 1, **characterized in that**:
pressure difference reducing means for reducing a difference between the pressure in the intake passage (13) and the pressure in the exhaust passage (20) without controlling the opening of the throttle valve (17) is provided; and
the pressure difference reducing means reduces the difference between the pressure in the intake passage (13) and the pressure in the exhaust passage (20) when energy regeneration is performed using the power regenerating means (30).

4. The energy regeneration control system according to claim 3, **characterized in that**:
when energy regeneration is performed using the power regenerating means (30), the pressure difference reducing means reduces the difference between the pressure in the intake passage (13) and the pressure in the exhaust passage (20) if the energy regeneration controlling means can not control the opening of the throttle valve (17) to an opening required for achieving the minimum difference between the pressure in the intake passage (13) and the pressure in the exhaust passage (20).

5. The energy regeneration control system according to claim 3 or 4, **characterized in that**:
an exhaust gas recirculation passage (25) for connecting the intake passage (13) to the exhaust passage (20) is provided;
an EGR control valve (26) is disposed in the exhaust gas recirculation passage (25); and
the pressure difference reducing means opens the EGR control valve (26) when energy regeneration is performed using the power regenerating means (30).

6. The energy regeneration control system according to claim 5, **characterized in that**:
fresh air amount controlling means for controlling an amount of fresh air to be supplied to the internal combustion engine without controlling the opening of the throttle valve (17) is provided; and
the fresh air amount controlling means reduces the fresh air amount when energy regeneration is performed using the power regenerating means (30).

7. The energy regeneration control system according to claim 3 or 4, **characterized in that**:
valve controlling means for controlling an opening operation of at least one of an intake valve (7) and an exhaust valve (9) is provided; and
the pressure difference reducing means controls the opening operation of at least one of the intake valve (7) and the exhaust valve (9) via the valve controlling means so as to reduce the difference between the pressure in the intake passage (13) and the pressure in the exhaust passage (20) when energy regeneration is performed using the power regenerating means (30).

8. The energy regeneration control system according to any one of claims 3 to 6, **characterized in that**:
an exhaust-gas-driven type supercharger (14) driven by an exhaust gas in the internal combustion engine (1) is provided;
a bypass passage (60) is provided, which bypasses the exhaust-gas-driven type supercharger (14) by connecting a portion of the exhaust passage (20) located upstream of the exhaust-gas-driven type supercharger (14) to a portion of the exhaust passage (20) located downstream of the exhaust-gas-driven type supercharger (14);
a bypass control valve (62) is disposed in the bypass passage (60); and
the pressure difference reducing means opens the bypass control valve (62) when energy regeneration is performed using the power regenerating means (30).

9. The energy regeneration control system according to any one of claims 3 to 6, **characterized in that**:
an exhaust-gas-driven type supercharger (14) driven by an exhaust gas in the internal combustion engine (1) is provided;
turbine capacity controlling means (63) is provided, which controls a turbine capacity of the exhaust-gas-driven type supercharger (14) without controlling the opening of the throttle valve (17); and
the pressure difference reducing means increases the turbine capacity of the exhaust-gas-driven type supercharger (14) via the turbine capacity controlling means (63) when energy regeneration is performed using the power regenerating means (30).

10. The energy regeneration control system according to claim 1, **characterized in that**:
supply gas reducing means for reducing an amount of gas to be supplied to the internal combustion engine (1) without controlling the opening of the throttle valve (17) is provided; and
the supply gas reducing means reduces the amount of gas to be supplied to the internal combustion engine (1) when energy regeneration is performed using the power regenerating means (30).

11. The energy regeneration control system according to claim 10, **characterized in that**:
a branch passage (67) is provided, which extends from an intermediate portion of the intake passage (66) located upstream of the throttle valve (17) and is branched into an intake bypass passage (68) extending to a portion of the intake passage (13) located downstream of the throttle valve (17) and an exhaust bypass passage (69) extending to the exhaust passage (22);
a switching valve (72) for selectively connecting the branch passage (67) to either one of the intake bypass passage (68) and the exhaust bypass passage (69) is provided; and
the supply gas reducing means connects the branch passage (67) to the exhaust bypass passage (69) via the switching valve (72) when energy regeneration is performed using the power regenerating means (30).

12. The energy regeneration control system according to claim 1,
**characterized by** further comprising:
an exhaust-gas-driven type supercharger (14) driven by an exhaust gas in the internal combustion engine (1) is provided

13. A energy regeneration control system for an internal combustion engine (1) including power regenerating means (30) for performing energy regeneration by converting kinetic energy of a vehicle into electric energy, the energy regeneration control system being **characterized in that**:
energy regeneration controlling means is provided, which controls a difference between a pressure in an intake passage (13) of the internal combustion engine (1) and a pressure in an exhaust passage (20) of the internal combustion engine (1) by controlling an opening of a throttle valve (17); and
the energy regeneration controlling means controls energy regeneration efficiency of the power regenerating means (30) by controlling the opening of the throttle valve (17).

14. A energy regeneration control method for an internal combustion engine (1) including power regenerating means (30) for performing energy regeneration by converting kinetic energy of a vehicle into electric energy, the method being
**characterized in that**:
an opening of a throttle valve (17) is controlled so as to achieve a minimum difference between a pressure in an intake passage (13) of the internal combustion engine (1) and a pressure in an exhaust passage (20) of the internal combustion engine (1) when energy regeneration is performed using the power regenerating means (30).

15. A energy regeneration control method for an internal combustion engine (1) including power regenerating means (30) for performing energy regeneration by converting kinetic energy of a vehicle into electric energy, the method being
**characterized in that**:
a difference between a pressure in an intake passage (13) of the internal combustion engine (1) and a pressure in an exhaust passage (20) of the internal combustion engine (1) is controlled by controlling an opening of a throttle valve (17); and
energy regeneration efficiency of the power regenerating means (30) is controlled by controlling the opening of the throttle valve (17).
